# EUROPEAN PATENT APPLICATION

(11) **EP 4 794 085 A1**
(43) Date of publication of application: **19.08.2026**
(21) Application number: 24876492.0
(22) Date of filing: 08.10.2024
(51) Int. Cl.: H01M 50/258, H01M 50/298, H01M 10/052, H01M 10/42

(54) **LOW-IMPEDANCE STORAGE BATTERY**

(30) Priority: 11.10.2023 CN 202311308257
(71) Applicant: Newtech Co., Ltd., Taoyuan City 320049 (TW)
(72) Inventor: LIU, Chia-Liang, Taoyuan City Taiwan 32070 (TW)
(74) Representative: Becker, Eberhard
(86) International application number: PCT/CN2024/123332
(87) International publication number: WO 2025/077678

(57) **Abstract**

Provided in the present invention is a low-impedance storage battery, which comprises: an accommodation case, which is internally provided with an accommodation space; a first energy storage module, which is used for accumulating or supplying electric energy and is provided in the accommodation case; and a second energy storage module, which is used for storing or supplying a short-time large current and is provided in the accommodation case, the first energy storage module and the second energy storage module being electrically connected to each other. The second energy storage module at least comprises a circuit board, the circuit board having a second positive electrode and a second negative electrode. One side of the accommodation case is provided with a first electrical connector and a second electrical connector. One end of the first electrical connector and one end of the second electrical connector pass out of the accommodation case, and the other end of the first electrical connector and the other end of the second electrical connector are located in the accommodation case. The second positive electrode and the second negative electrode on the circuit board of the second energy storage module are respectively fixed at one end of the first electrical connector and one end of the second electrical connector in the accommodation case.

## Description

### Technical Field

The present invention relates to a battery, and more particularly to a low-impedance storage battery having a module structure capable of reducing battery impedance.

### Related Art

In existing lithium iron batteries, internal components are mostly fixed together and then connected to electric connectors through electrical connection wires or copper sheets. If connected to electric connectors through copper sheets, since copper sheets are rigid bodies, when the overall internal components of the lithium iron battery are fixed together, a high load bracket structure is needed to support the weight of the entire lithium iron battery. If electrically connected with electric connectors through electrical connection wires, besides the difficulty in assembling the electrical connection wires, both ends of the electrical connection wires need to be fastened to contact points. If the connection wires themselves and manufacturing tolerances are further considered, the impedance of the entire lithium iron battery circuit may be inadvertently increased. Therefore, regardless of whether the lithium iron battery is assembled to electric connectors through electrical connection wires or copper sheets, each assembly method has its inherent disadvantages.

Therefore, it is necessary to have a low-impedance storage battery that may replace the currently used lithium iron battery module structure with a new battery module structure, avoid high load bracket structures, reduce the overall impedance of the lithium iron battery module structure, satisfy simplified structure and assembly steps, and achieve the purpose of improving charge and discharge efficiency.

### SUMMARY OF INVENTION

In view of the above deficiencies, and to achieve the main purpose of the above low-impedance storage battery capable of reducing battery impedance, the structure of the low-impedance storage battery disclosed in the present invention includes: an accommodating box, in which an accommodating space is formed inside; a first energy storage module, configured to store or supply electric energy, and arranged in the accommodating box; a second energy storage module, configured to store or supply short-time large current, and arranged in the accommodating box, in which the first energy storage module and the second energy storage module are electrically connected with each other, the second energy storage module at least includes a circuit board, and the circuit board is provided with a second positive electrode and a second negative electrode; a first electric connector and a second electric connector are arranged on one side of the accommodating box, one end of the first electric connector and one end of the second electric connector penetrate out of the accommodating box, the other end of the first electric connector and the other end of the second electric connector are located in the accommodating box, and the second positive electrode and the second negative electrode on the circuit board of the second energy storage module are fixed to the end of the first electric connector and the end of the second electric connector in the accommodating box respectively.

To achieve the above purpose, in the low-impedance storage battery disclosed in the present invention, the first energy storage module is a lithium battery structure.

To achieve the above purpose, in the low-impedance storage battery disclosed in the present invention, the lithium battery structure is formed by a plurality of lithium battery units connected in series and parallel, and the plurality of lithium battery units are selected from one of lithium ternary batteries, lithium iron batteries, or a group thereof.

To achieve the above purpose, in the low-impedance storage battery disclosed in the present invention, the second energy storage module is a capacitor structure.

To achieve the above purpose, in the low-impedance storage battery disclosed in the present invention, the capacitor structure is formed by a plurality of capacitor units connected in series and parallel, and the plurality of capacitor units are selected from one of capacitors, supercapacitors, coil-type capacitors, inductive capacitors, or a group thereof.

To achieve the above purpose, in the low-impedance storage battery disclosed in the present invention, the second energy storage module is fixed to one end of the first electric connector and one end of the second electric connector in the accommodating box by screw fastening, snap-fitting, welding, plug-in connection, or a combination thereof.

To achieve the above purpose, the low-impedance storage battery disclosed in the present invention further includes a control module, in which the charging action or discharging action between the first energy storage module and the second energy storage module is controlled through the control module.

To achieve the above purpose, the low-impedance storage battery disclosed in the present invention further includes a pair of electrical connection wires, the first energy storage module has a first positive electrode and a first negative electrode, one end of the pair of electrical connection wires is electrically connected with the first positive electrode and the first negative electrode respectively, and the other end of the pair of electrical connection wires is electrically connected with a pair of second circuit contacts of the control module respectively.

To achieve the above purpose, in the low-impedance storage battery disclosed in the present invention, the accommodating box includes a cover plate and a box body, at least one side of the box body is an opening for accommodating at least the first energy storage module and the second energy storage module.

To achieve the above purpose, in the low-impedance storage battery disclosed in the present invention, a spacer material is interposed between the first energy storage module and the second energy storage module, one side of the spacer material is attached to the first energy storage module, and another side of the spacer material is supported on the second energy storage module.

To achieve the above purpose, in the low-impedance storage battery disclosed in the present invention, the first energy storage module is fixed at the bottom layer in the accommodating box by foam, gel, adhesive, gluing, or a combination thereof.

The detailed structure, features, assembly or usage method of the low-impedance storage battery disclosed in the present invention will be described in the following detailed description of the embodiments. However, persons skilled in the art of the present invention should understand that such detailed description and the specific embodiments listed for implementing the present invention are only for explaining the present invention, and are not intended to limit the claims of the present invention.

### BRIEF DESCRIPTION OF THE DRAWINGS

FIG. 1 is a perspective exploded view of a low-impedance storage battery of the present invention;
FIG. 2 is a perspective appearance view of the low-impedance storage battery after being assembled of the present invention.

### REFERENCE SIGNS LIST

100: low-impedance storage battery;
10: accommodating box;
11: cover plate;
12: box body;
13: opening;
14: first electric connector;
15: second electric connector;
20: first energy storage module;
30: second energy storage module;
31: circuit board;
311: second positive electrode;
312: second negative electrode;
32: control module;
40: spacer material.

### DESCRIPTION OF THE EMBODIMENTS

Hereinafter, the composition components, steps and achieved effects of the low-impedance storage battery disclosed in the present invention are explained with reference to the corresponding preferred embodiments in conjunction with the accompanying drawings. However, the components, dimensions and appearance of the low-impedance storage battery in the drawings are only used to explain the technical features of the present invention, and do not constitute limitations to the present invention.

In view of solving the deficiencies of the prior art that the structure of lithium iron battery needs a large load bracket structure and the overall impedance of the lithium iron battery circuit is relatively high, the present invention designs a low-impedance storage battery 100, which mainly divides the structure of the low-impedance storage battery into two parts, namely a first energy storage module 20 and a second energy storage module 30, to be assembled and fixedly disposed inside a box body 12 of an accommodating box 10 having an accommodating space. The heavier first energy storage module 20, which is configured to store or supply electric energy, is designed to be fixed at the bottom layer of the box body 12 of the accommodating box 10 in the accommodating space, which may eliminate the trouble of needing a large load bracket to fix the heavier first energy storage module 20, and simplify the structure and assembly steps. Additionally, the second energy storage module 30 that needs large current discharge, which is configured to store or supply short-time large current, is arranged in the box body 12 of the accommodating box 10 and placed above the first energy storage module 20, or alternatively, the first energy storage module 20 and the second energy storage module 30 are placed side by side on both sides of the accommodating box 10, and respectively fixed at the bottom layer in the box body 12 of the accommodating box 10. Meanwhile, a second positive electrode 311 and a second negative electrode 312 on the circuit board 31 of the second energy storage module 30 are respectively directly fixed to two electric connectors located on a side cover plate 11 of the accommodating box 10. The two electric connectors are respectively a first electric connector 14 and a second electric connector 15. One end of the first electric connector 14 and one end of the second electric connector 15 penetrate out of the cover plate 11 of the accommodating box 10, and the other end of the first electric connector 14 and the other end of the second electric connector 15 are located in the accommodating box 10. By eliminating the use of electrical connection wires, the second positive electrode 311 and the second negative electrode 312 on the circuit board 31 of the second energy storage module 30 are respectively directly fixed to one end of the first electric connector 14 and one end of the second electric connector 15 in the accommodating box 10, which may reduce the impedance of the electrical connection wires themselves and the front and rear contact points, and may also simplify the assembly steps, achieving the purpose of meeting the demand for instantaneous large current charging and discharging.

The present invention further includes a control module 32. The control module 32 is respectively electrically connected with the first energy storage module 20 and the second energy storage module 30. The charging action or discharging action between the first energy storage module 20 and the second energy storage module 30 is controlled through the control module 32. The control module 32 may be an independent module, or may be integrated into the circuit board 31 of the second energy storage module 30, or integrated into the first energy storage module 20. The first energy storage module 20 may be components such as lithium iron battery, and the second energy storage module 30 may be components such as supercapacitor set. In the embodiment, since the charging and discharging actions between the lithium iron battery and the supercapacitor set are performed under controllable conditions, the requirements for the method of electrical connection between the first energy storage module 20 and the second energy storage module 30 are relatively low. In an embodiment, the control module 32 is an independent module, and the first energy storage module 20 and the second energy storage module 30 are respectively connected via the control module 32 with a pair of electrical connection wires (not shown in the figure). However, the present invention is not limited thereto, which may achieve the requirements of satisfying charging and discharging efficiency, and also have the benefits of simplifying the structure and assembly steps.

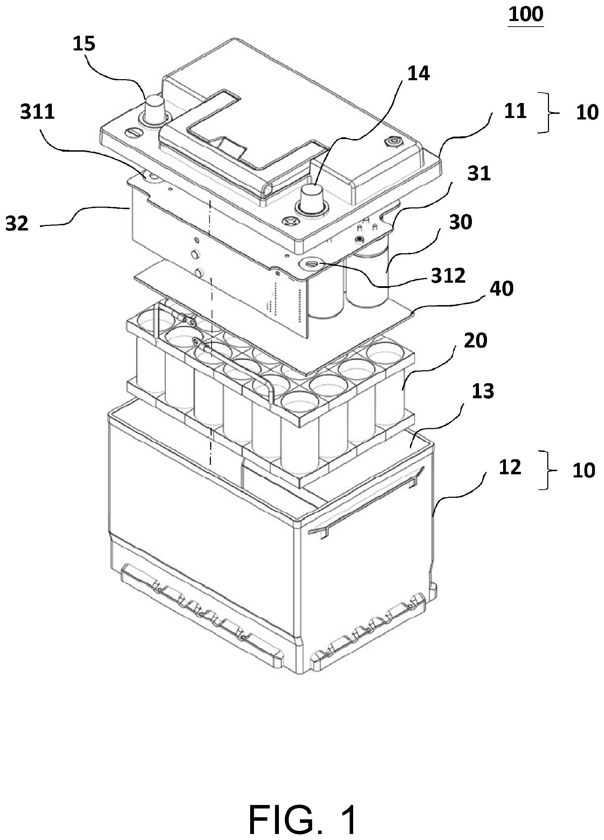

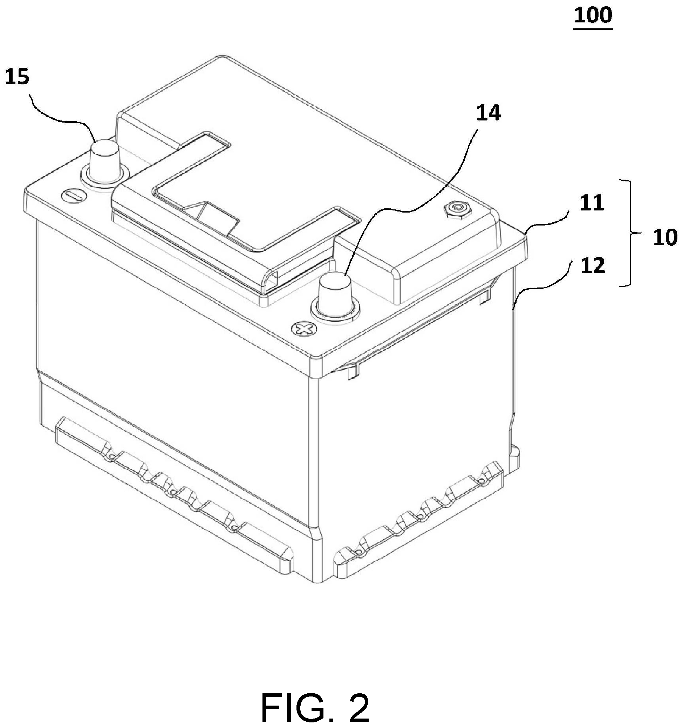

Referring to the perspective exploded view of the low-impedance storage battery of the present invention shown in FIG. 1 and the perspective appearance view of the low-impedance storage battery of the present invention shown in FIG. 2, the first embodiment of the present invention provides a low-impedance storage battery 100, which includes: an accommodating box 10, including a cover plate 11 and a box body 12, in which the box body 12 is a rectangular cuboid, but the present invention is not limited thereto, the top surface of the box body 12 has an opening for the cover plate 11 to match and cover, the inside of the box body 12 has an accommodating space, the first energy storage module 20 and the second energy storage module 30 are arranged in the box body 12 of the accommodating box 10; the first energy storage module 20, configured to store or supply electric energy, is disposed at the bottom layer inside the box body 12 of the accommodating box 10; the second energy storage module 30, configured to store or supply short-time large current, is arranged in the box body 12 of the accommodating box 10, placed above the first energy storage module 20, in another embodiment (not shown in the figure), the second energy storage module 30 and the first energy storage module 20 are placed side by side on both sides of the accommodating box 10, and respectively fixed at the bottom layer in the box body 12 of the accommodating box 10, the first energy storage module 20 and the second energy storage module 30 are directly or indirectly electrically connected with each other, the second energy storage module 30 includes a circuit board 31, the circuit board 31 has a second positive electrode 311 and a second negative electrode 312; the first electric connector 14 and the second electric connector 15 penetrate through the cover plate 11 located on the top surface of the box body 12 of the accommodating box 10, the cover plate 11 is configured to match and cover the opening 13 of the box body 12 of the accommodating box 10, in the present embodiment, the cover plate 11 is respectively provided with openings at positions corresponding to the first electric connector 14 and the second electric connector 15, for the first electric connector 14 and the second electric connector 15 to be inserted into the openings, one end of the first electric connector 14 and one end of the second electric connector 15 is located in the box body 12 of the accommodating box 10, in which the end of the first electric connector 14 and the end of the second electric connector 15 in the box body 12 may be directly fastened to the second positive electrode 311 and the second negative electrode 312 on the circuit board 31 of the second energy storage module 30 in the box body 12 of the accommodating box 10 respectively by screw fastening, snap-fitting, welding, plug-in connection, or a combination thereof, eliminating electrical connection wires, so as to achieve the purpose of reducing the impedance between the first electric connector 14 and the second electric connector 15 and the second energy storage module 30; the other end of the first electric connector 14 and the other end of the second electric connector 15 penetrate out of the cover plate 11 of the box body 12 of the accommodating box 10, and may be electrically connected with an external power source (not shown in the figure) or an external load (not shown in the figure).

Referring to the perspective exploded view of the low-impedance storage battery of the present invention shown in FIG. 1 and the perspective appearance view of the low-impedance storage battery of the present invention shown in FIG. 2, in the first embodiment, the present invention provides a low-impedance storage battery 100, in which the first energy storage module 20 is a lithium battery structure, the lithium battery structure is formed by a plurality of lithium battery units connected in series and parallel, in the present embodiment, the lithium battery unit is selected from one of lithium ternary battery, lithium iron battery or a group thereof; the second energy storage module 30 is a capacitor structure, the capacitor structure is formed by a plurality of capacitor units connected in series and parallel, in the present embodiment, the capacitor unit is selected from one of capacitor, supercapacitor, coil-type capacitor, inductive capacitor, or a group thereof.

Referring to the perspective exploded view of the low-impedance storage battery of the present invention shown in FIG. 1 and the perspective view of the low-impedance storage battery of the present invention shown in FIG. 2, in the first embodiment, the present invention provides a low-impedance storage battery 100, in which since first weight of the first energy storage module 20 is greater than second weight of the second energy storage module 30, the first energy storage module 20 is disposed at the bottom layer in the box body 12 of the accommodating box 10, through the accommodating space in the box body 12 of the accommodating box 10 surrounding the peripheral area of the first energy storage module 20, in the present embodiment, the first energy storage module 20 is fixed at the bottom layer in the box body 12 of the accommodating box 10 by foam, gel, adhesive, gluing, or a combination thereof, to achieve the effect of not needing a large load support structure to support the weight of the first energy storage module 20, the second energy storage module 30 is placed above the first energy storage module 20, in another embodiment (not shown in the figure), the second energy storage module 30 and the first energy storage module 20 are placed side by side on both sides of the accommodating box 10, and respectively fixed at the bottom layer in the box body 12 of the accommodating box 10, in the present embodiment, spacer material 40 may be interposed between the first energy storage module 20 and the second energy storage module 30, one side of the spacer material 40 is attached above the first energy storage module 20, another side of the spacer material 40 is supported below the second energy storage module 30, and the first energy storage module 20 and the second energy storage module 30 are directly or indirectly electrically connected with each other.

Referring to the perspective exploded view of the low-impedance storage battery of the present invention shown in FIG. 1 and the perspective appearance view of the low-impedance storage battery of the present invention shown in FIG. 2, in the second embodiment, the present invention provides a low-impedance storage battery 100, further including a control module 32, in which the control module 32 is electrically connected with the first energy storage module 20 and the second energy storage module 30, in the present embodiment, the control module 32 is an independent module, the first energy storage module 20 and the second energy storage module 30 are respectively electrically connected with the control module 32 through a pair of electrical connection wires (not shown); in another embodiment, the control module 32 is integrated into the circuit board 31 of the second energy storage module 30, the first energy storage module 20 is electrically connected with the control module 32 of the circuit board 31 of the second energy storage module 30 through a pair of electrical connection wires (not shown), in which one end of the pair of electrical connection wires (not shown) is electrically connected with the first positive electrode (not shown) and the first negative electrode (not shown) of the first energy storage module 20 respectively, the other end of the pair of electrical connection wires (not shown) is electrically connected with a pair of second circuit contacts (not shown) of the control module 32 respectively, the charging action or discharging action between the first energy storage module 20 and the second energy storage module 30 is controlled through the control module 32, the control module 32 adjusts the output voltage and output current by detecting at least one electrical characteristic of the first energy storage module 20 or the second energy storage module 30, in the present embodiment, in the charging action between the first energy storage module 20 and the second energy storage module 30, an external power source (not shown) is used as the power source, the external power source (not shown) respectively correspondingly electrically connects the first electric connector 14 and the second electric connector 15 to perform the charging action to the first energy storage module 20 via the second energy storage module 30, to avoid the influence of large current charging of the first energy storage module 20; in the present embodiment, in the discharging action between the first energy storage module 20 and the second energy storage module 30, the first energy storage module 20 is used as the power source to perform the charging action to the second energy storage module 30, or the control module 32 controls the first energy storage module 20 and the second energy storage module 30, so that the first energy storage module 20 and the second energy storage module 30 jointly serve as the power supply source, to supply the large power demand required by the external load (not shown) for a long duration under controllable conditions, to avoid the influence of large current discharging or over-discharging of the first energy storage module 20, to achieve the purpose of protecting the first energy storage module 20 and extending the service life of the first energy storage module 20.

Finally, it is emphasized that the constituent components disclosed in the foregoing embodiments of the present invention are only for illustration purposes, and are not used to limit the scope of the present application, substitutions or variations of other equivalent components should also be covered by the claims of the present application.

## Claims

1. A low-impedance storage battery, **characterized in that**, comprising:
an accommodating box, wherein an accommodating space is formed inside;
a first energy storage module configured to store or supply electric energy, and arranged in the accommodating box;
a second energy storage module configured to store or supply short-time large current, and arranged in the accommodating box, wherein the first energy storage module and the second energy storage module are electrically connected with each other, the second energy storage module at least comprises a circuit board, and the circuit board is provided with a second positive electrode and a second negative electrode; and
a first electric connector and a second electric connector are arranged on a side of the accommodating box, wherein an end of the first electric connector and an end of the second electric connector penetrate out of the accommodating box, the other end of the first electric connector and the other end of the second electric connector are located in the accommodating box, and the second positive electrode and the second negative electrode on the circuit board of the second energy storage module are fixed to the end of the first electric connector and the end of the second electric connector in the accommodating box respectively.

2. The low-impedance storage battery according to claim 1, **characterized in that**, the first energy storage module is a lithium battery structure.

3. The low-impedance storage battery according to claim 2, **characterized in that**, the lithium battery structure is formed by a plurality of lithium battery units connected in series and parallel, and the plurality of lithium battery units are selected from one of lithium ternary batteries, lithium iron batteries, or a group thereof.

4. The low-impedance storage battery according to claim 1, **characterized in that**, the second energy storage module is a capacitor structure.

5. The low-impedance storage battery according to claim 4, **characterized in that**, the capacitor structure is formed by a plurality of capacitor units connected in series and parallel, and the plurality of capacitor units are selected from one of capacitors, supercapacitors, coil-type capacitors, inductive capacitors, or a group thereof.

6. The low-impedance storage battery according to claim 1, **characterized in that**, the second energy storage module is fixed to an end of the first electric connector and an end of the second electric connector in the accommodating box by screw fastening, snap-fitting, welding, plug-in connection, or a combination thereof.

7. The low-impedance storage battery according to claim 1, **characterized in that**, further comprising a control module, wherein a charging action or discharging action between the first energy storage module and the second energy storage module is controlled through the control module.

8. The low-impedance storage battery according to claim 7, **characterized in that**, further comprising a pair of electrical connection wires, wherein the first energy storage module has a first positive electrode and a first negative electrode, an end of the pair of electrical connection wires is electrically connected with the first positive electrode and the first negative electrode respectively, and the other end of the pair of electrical connection wires is electrically connected with a pair of second circuit contacts of the control module respectively.

9. The low-impedance storage battery according to claim 1, **characterized in that**, the accommodating box comprises a cover plate and a box body, and at least a side of the box body is an opening for accommodating at least the first energy storage module and the second energy storage module.

10. The low-impedance storage battery according to claim 1, **characterized in that**, a spacer material is interposed between the first energy storage module and the second energy storage module, a side of the spacer material is attached to the first energy storage module, and the other side of the spacer material is supported on the second energy storage module.

11. The low-impedance storage battery according to claim 1, **characterized in that**, the first energy storage module is fixed at the bottom layer inside the accommodating box by foam, gel, adhesive, gluing, or a combination thereof.
